# EUROPÄISCHE PATENTSCHRIFT

(11) **EP 3 277 049 B1**
(45) Veröffentlichungstag und Bekanntmachung des Hinweises auf die Patenterteilung: **23.03.2022**
(21) Anmeldenummer: 16181833.1
(22) Anmeldetag: 29.07.2016
(51) Int. Cl.: H04W 76/00

(54) **FUNKZUGANGSENTITÄT**
RADIO ACCESS ENTITY
ENTITE D'ACCES RADIO

(43) Veröffentlichungstag der Anmeldung: 31.01.2018
(73) Patentinhaber: Deutsche Telekom AG, 53113 Bonn (DE)
(72) Erfinder: Zimmermann, Gerd, 66431 Weiterstadt (DE)
(74) Vertreter: Braun-Dullaeus Pannen Emmerling Patent- & Rechtsanwaltspartnerschaft mbB

(56) Entgegenhaltungen:
- WO-A2-2014/204716
- US-B1- 9 002 282

## Beschreibung

Die vorliegende Erfindung betrifft den Funkzugang zu einem drahtlosen Kommunikationsnetzwerk.

In modernen Kommunikationsnetzwerken werden Kommunikationspakete gemäß einem Kommunikationsprotokoll, beispielsweise dem Internetprotokoll, zusammengesetzt. Im Funkzugangsbereich werden die Kommunikationspakete per Funk mittels einer drahtlosen Datenübertragungstechnologie, wie beispielsweise LTE oder UMTS, an ein mobiles Kommunikationsgerät übertragen oder von dem mobilen Kommunikationsgerät empfangen. Die Kommunikation mit dem mobilen Kommunikationsgerät findet in der Regel über eine drahtlose Übertragungstechnologie, wie beispielsweise LTE, statt.

Ein mobiles Kommunikationsgerät hat in der Regel jedoch mehrere Kommunikationsschnittstellen, wie WLAN und LTE bzw. UMTS, welche für die Kommunikation von Kommunikationspaketen nicht gemeinsam genutzt werden.

In WO 2014/204716 A2 ist ein Verfahren zum Aggregieren von Datenverkehr zur Kommunikation zwischen einer Femtozelle und einem Mobilgerät offenbart, wobei ein Strom von Datenpaketen gemäß unterschiedlicher Übertragungsmodi von der Femtozelle zu dem Mobilgerät übertragen werden kann. Dabei kann zwischen einer LTE-Schnittstelle und einer WiFi-Schnittstelle zur Übertragung der Datenpakete umgeschaltet werden.

In US 9,002,282 B1 ist ein System zur Koexistenzarbitrierung mit einem ersten Transceivermodul, einem zweiten Transceivermodul und einem Arbitrierungsmodul offenbart, wobei das Arbitrierungsmodul Antennen selektiv mit dem ersten Transceivermodul und dem zweiten Transceivermodul verbinden kann.

Es ist eine Aufgabe der vorliegenden Erfindung, ein effizientes Konzept für die Kommunikation von Kommunikationspaketen zu schaffen, bei dem mehrere Kommunikationsschnittstellen genutzt werden.

Diese Aufgabe wird durch die Merkmale der unabhängigen Ansprüche gelöst. Vorteilhafte Weiterbildungsformen sind Gegenstand der Figuren, der Beschreibung sowie der abhängigen Ansprüche.

Die vorliegende Erfindung basiert auf der Erkenntnis, dass die Kommunikationspakete in der Regel Nutzdaten, sog. Payload, und Zusatzdaten wie Steuerdaten und/oder Overhead aufweisen. Die Nutzdaten und die Zusatzdaten können voneinander separiert und über unterschiedliche Datenübertragungstechnologien separat übertragen werden. Diese Daten können im Funkzugangsbereich zusammengesetzt oder voneinander separiert werden.

Gemäß einem ersten Aspekt betrifft die Erfindung eine Funkzugangsentität, mit einer ersten Kommunikationsschnittstelle zum Empfangen eines Kommunikationspakets, wobei das Kommunikationspaket Nutzdaten und Zusatzdaten umfasst, einem Prozessor, welcher ausgebildet ist, die Nutzdaten von den Zusatzdaten zu separieren, die Nutzdaten in ein erstes Datenpaket zu überführen und die Zusatzdaten in ein zweites Datenpaket zu überführen, und einer zweiten Kommunikationsschnittstelle, welche ausgebildet ist, das erste Datenpaket gemäß einem ersten Datenübertragungsprotokoll auszusenden und das zweite Datenpaket gemäß einem zweiten Datenübertragungsprotokoll auszusenden, wobei das erste Datenübertragungsprotokoll und das zweite Datenübertragungsprotokoll unterschiedlich sind.

Die Datenpakete können von und zu einem mobilen Kommunikationsgerät über ein Funkzugangsnetzwerk (RAN: Radio Access Network) übertragen werden.

In einer Ausführungsform ist die erste Kommunikationsschnittstelle eine Funkschnittstelle, beispielsweise eine UMTS- oder LTE-Kommunikationsschnittstelle.

In einer Ausführungsform ist der Prozessor ausgebildet, die Nutzdaten und die Zusatzdaten aus dem Kommunikationspaket, insbesondere aus einem Datenrahmen des Kommunikationspakets, zu extrahieren. Hierzu kann der Prozessor ausgebildet sein, ein Protokoll, welchem das Kommunikationspaket unterliegt, beispielsweise das Internet-Protokoll, zu implementieren, um die Nutzdaten und die Zusatzdaten aus dem Kommunikationspaket zu extrahieren.

In einer Ausführungsform sind das erste Datenpaket und das zweite Datenpaket IP-Datenpakete (IP: Internet-Protokoll). Hierzu kann der Prozessor ausgebildet sein, das IP-Protokoll zu implementieren, um die Datenpakete gemäß dem IP-Protokoll zusammenzusetzen.

In einer Ausführungsform sind die Nutzdaten Payload-Daten und/oder die Zusatzdaten Steuerdaten oder Overhead-Daten, beispielsweise gemäß dem IP-Protokoll.

In einer Ausführungsform sind das erste Datenübertragungsprotokoll und das zweite Datenübertragungsprotokoll eines der folgenden drahtlosen Datenübertragungsprotokolle: LTE, UMTS, GSM, Hiperlan, WLAN. Dabei legen die Datenübertragungsprotokolle die vorgenannten Datenüberragungstechnologien fest.

In einer Ausführungsform weist die zweite Kommunikationsschnittstelle einen ersten Kommunikationsport für das Aussenden des ersten Datenpakets gemäß dem ersten Datenübertragungsprotokoll bzw. Datenübertragungstechnologie und einen zweiten Kommunikationsport für das Aussenden des zweiten Datenpakets gemäß dem zweiten Datenübertragungsprotokoll bzw. Datenübertragungstechnologie auf. Dadurch können das erste Datenpaket und das zweite Datenpaket unabhängig voneinander ausgesendet werden. Die Kommunikationsports können ferner für den Empfang von ersten Datenpaketen und zweiten Datenpaketen, welche separat Nutzdaten und Zusatzdaten eines Kommunikationsdatenpakets transportieren, ausgebildet sein.

Gemäß einem zweiten Aspekt betrifft die Erfindung ein mobiles Kommunikationsgerät, beispielsweise ein Smartphone, mit einer ersten Kommunikationsschnittstelle zum Empfangen eines ersten Datenpakets gemäß einem ersten Datenübertragungsprotokoll, wobei das erste Datenpaket Nutzdaten eines Kommunikationspakets aufweist, einer zweiten Kommunikationsschnittstelle zum Empfangen eines zweiten Datenpakets gemäß einem zweiten Datenübertragungsprotokoll, wobei das zweite Datenpaket Zusatzdaten des Kommunikationspakets umfasst, und einem Prozessor, welcher ausgebildet ist, das Kommunikationspaket aus den Nutzdaten und den Zusatzdaten zusammenzusetzen.

Das mobile Kommunikationsgerät ist in einer Ausführungsform ausgebildet, mit der Funkzugangsentität gemäß dem ersten Aspekt zu kommunizieren.

In einer Ausführungsform ist der Prozessor ausgebildet, die Nutzdaten gemäß den Zusatzdaten zu handhaben. Die Zusatzdaten können beispielsweise Control- oder Steuerdaten zur Handhabung der Nutzdaten sein.

In einer Ausführungsform ist der Prozessor ausgebildet, ein Sendedatenpaket, das Nutzdaten und Steuerdaten umfasst, in ein erstes Datenpaket mit Nutzdaten und in ein zweites Datenpaket mit Steuerdaten aufzuteilen, wobei die erste Kommunikationsschnittstelle ausgebildet ist, das erste Datenpaket gemäß dem ersten Datenübertragungsprotokoll auszusenden, und wobei die zweite Kommunikationsschnittstelle ausgebildet ist, das zweite Datenpaket gemäß dem zweiten Datenübertragungsprotokoll auszusenden. Das erste und zweite Datenpaket können an die Funkzugangsentität gemäß dem ersten Aspekt ausgesendet werden. Dadurch werden die Kommunikationsressourcen des mobilen Kommunikationsgerätes effizient genutzt.

Gemäß einem dritten Aspekt betrifft die Erfindung ein Subkommunikationsnetzwerk in einem Kommunikationsnetzwerk mit einer Mehrzahl von Subnetzwerken, mit der Funkzugangsentität nach dem ersten Aspekt, wobei die zweite Kommunikationsschnittstelle, ausgebildet ist, das erste Datenpaket gemäß dem ersten Datenübertragungsprotokoll zu empfangen oder auszusenden und das zweite Datenpaket gemäß dem zweiten Datenübertragungsprotokoll separat von dem ersten Datenpaket zu empfangen oder auszusenden.

In einer Ausführungsform umfasst das Subkommunikationsnetzwerk eine weitere Netzwerkentität, welche ausgebildet ist, mit der Funkzugangsentität zu kommunizieren.

In einer Ausführungsform ist die weitere Netzwerkentität ein Router.

In einer Ausführungsform ist die weitere Netzwerkentität ausgebildet, das erste Datenpaket und das zweite Datenpaket separat voneinander, beispielsweise von dem mobilen Kommunikationsgerät nach dem zweiten Aspekt, zu empfangen.

In einer Ausführungsform ist der Prozessor ausgebildet, ein Kommunikationspaket aus dem ersten Datenpaket und dem zweiten Datenpaket zusammenzusetzen, wobei die erste Kommunikationsschnittstelle der Funkzugangsentität ausgebildet ist, das Kommunikationspaket an die weitere Netzwerkentität auszusenden.

In einer Ausführungsform ist die zweite Kommunikationsschnittstelle ausgebildet, mit dem mobilen Kommunikationsgerät nach dem zweiten Aspekt zu kommunizieren.

In einer Ausführungsform ist das Subkommunikationsnetzwerk ein Subkommunikationsnetzwerk, insbesondere eine Slice, gemäß der 5G-Technologie.

Weitere Ausführungsformen der Erfindung werden Bezug nehmend auf die beiliegenden Figuren näher erläutert. Es zeigen:
- Fig. 1: ein Kommunikationssystem mit einer Funkzugangsentität;
- Fig. 2: ein mobiles Kommunikationsgerät;
- Fig. 3: ein Subkommunikationsnetzwerk; und
- Fig. 4: ein Subkommunikationsnetzwerk.

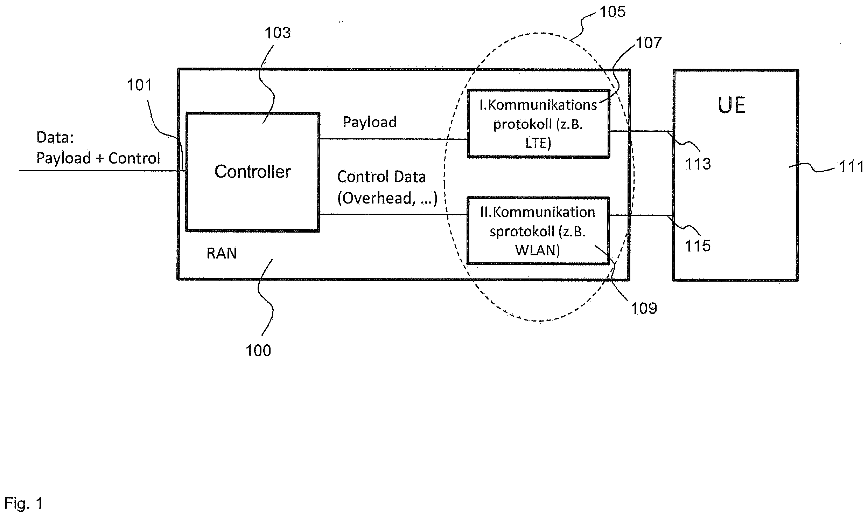

Fig. 1 zeigt ein Kommunikationssystem mit einer Funkzugangsentität 100, mit einer ersten Kommunikationsschnittstelle 101 zum Empfangen eines Kommunikationspakets, wobei das Kommunikationspaket Nutzdaten und Zusatzdaten umfasst, einem Prozessor 103, welcher ausgebildet ist, die Nutzdaten von den Zusatzdaten zu separieren, die Nutzdaten in ein erstes Datenpaket zu überführen und die Zusatzdaten in ein zweites Datenpaket zu überführen, und einer zweiten Kommunikationsschnittstelle 105, welche ausgebildet ist, das erste Datenpaket gemäß einem ersten Datenübertragungsprotokoll auszusenden und das zweite Datenpaket gemäß einem zweiten Datenübertragungsprotokoll auszusenden, wobei das erste Datenübertragungsprotokoll und das zweite Datenübertragungsprotokoll unterschiedlich sind.

Die zweite Kommunikationsschnittstelle kann einen ersten Kommunikationsport 107 aufweisen, der gemäß dem ersten Datenübertragungsprotokoll arbeitet, und einen zweiten Kommunikationsport 109 aufweisen, der gemäß dem zweiten Datenübertragungsprotokoll arbeitet.

Der Datenstrom zum mobilen Endgerät, z.B. UE, enthält Payload und Control Data. Im RAN mit der Funkzugangsentität 100 werden Payload und Control Data separiert und über unterschiedliche RAN-Ressourcen wie LTE und WLAN zum UE übertragen.

Der Controller bzw. Prozessor 103 implementiert einen Protokoll-Stack, um die Datenpakete zu entpacken und in Abhängigkeit von der Datenart (Payload oder Overhead/Control) in separate Pakete aufzuteilen, welche zum UE über unterschiedliche RAN-Kanäle übertragen werden.

Das mobile Endgerät 111 (Kommunikationsgerät) implementiert beispielsweise:
- Eine Zusammensetzung der Daten (Payload + Control), oder
- Payload wird gemäß Control verarbeitet, d.h. die Datenpakete werden nicht zusammengesetzt sondern separat verarbeitet.

Auf diese Weise wird die vorhandene RAN-Diversität genutzt, um die Übertragungskapazität zu erhöhen.

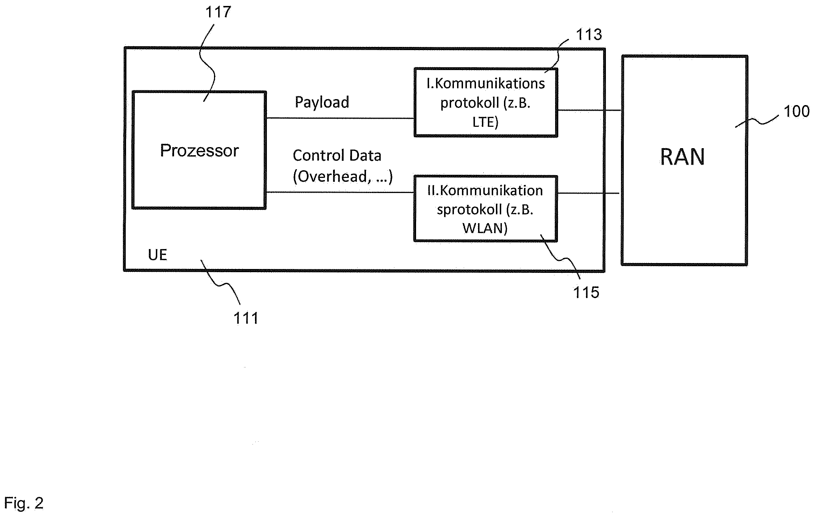

Fig. 2 zeigt ein mobiles Kommunikationsgerät 111 mit einer ersten Kommunikationsschnittstelle 113 zum Aussenden oder Empfangen eines ersten Datenpakets gemäß einem ersten Datenübertragungsprotokoll, wobei das erste Datenpaket Nutzdaten eines Kommunikationspakets aufweist, einer zweiten Kommunikationsschnittstelle 115 zum Aussenden oder Empfangen eines zweiten Datenpakets gemäß einem zweiten Datenübertragungsprotokoll, wobei das zweite Datenpaket Zusatzdaten des Kommunikationspakets umfasst, und einem Prozessor 117, welcher ausgebildet ist, das Kommunikationspaket aus den Nutzdaten und den Zusatzdaten zusammenzusetzen.

In einer Ausführungsform ist der Prozessor 117 ausgebildet, ein Sendedatenpaket, das Nutzdaten und Steuerdaten umfasst, in ein erstes Datenpaket mit Nutzdaten und in ein zweites Datenpaket mit Steuerdaten aufzuteilen, wobei die erste Kommunikationsschnittstelle 113 ausgebildet ist, das erste Datenpaket gemäß dem ersten Datenübertragungsprotokoll auszusenden, und wobei die zweite Kommunikationsschnittstelle 115 ausgebildet ist, das zweite Datenpaket gemäß dem zweiten Datenübertragungsprotokoll auszusenden.

Das erste Datenpaket und das zweite Datenpaket können von der Funkzugangsentität 100 empfangen werden, deren Prozessor 103 ausgebildet ist, ein Kommunikationspaket aus den ersten Daten und den zweiten Daten, beispielsweise gemäß dem IP-Protokoll, zusammenzusetzen. Das Kommunikationspaket kann dann über die Kommunikationsschnittstelle 101 ausgesendet werden.

Im UE 111 können die Datenpakete in zwei Teilpakete aufgeteilt werden, mit Payload und Control Data. Die Teilpakete werden in Analogie zum Download-Fall über verschiedene Kommunikationsprotokolle zum RAN mit der Funkzugangsentität 100 ausgesendet. Hierzu kann das UE separate Kommunikationsschnittstellen aufweisen (z.B. zwei Antennen). Alternativ können die vorhandenen Antennen des UEs (Antennendiversität) separat angesteuert werden.

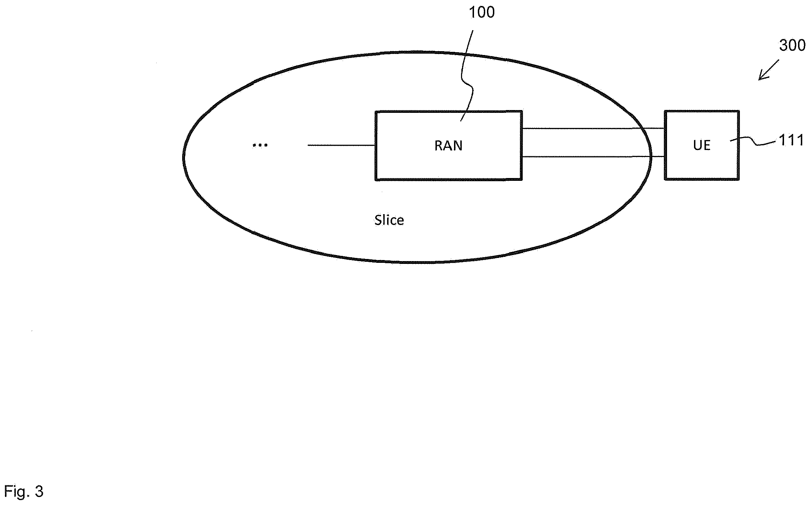

Fig. 3 zeigt ein Subkommunikationsnetzwerk 300 in einem nicht dargestellten Kommunikationsnetzwerk mit einer Mehrzahl von Subnetzwerken, mit der Funkzugangsentität 100, wobei die zweite Kommunikationsschnittstelle ausgebildet ist, das erste Datenpaket gemäß dem ersten Datenübertragungsprotokoll zu empfangen oder auszusenden und das zweite Datenpaket gemäß dem zweiten Datenübertragungsprotokoll separat von dem ersten Datenpaket zu empfangen oder auszusenden.

Das Subkommunikationsnetzwerk 300 kann ein Slice eines 5G-Kommunikationsnetzwerks sein, welche die Aufteilung des Kommunikationspaketes in das erste Datenpaket und das zweite Datenpaket, und/oder die Zusammensetzung des Kommunikationspaketes aus dem ersten Datenpaket und dem zweiten Datenpaket bewirkt.

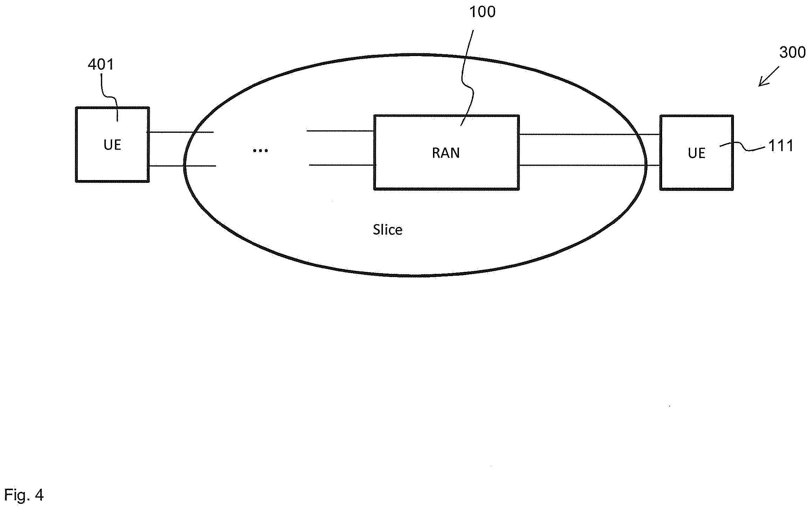

Fig. 4 zeigt das Subkommunikationsnetzwerk 300 in einer Ausführungsform, in welcher das erste Datenpaket und das zweite Datenpaket voneinander separiert zwischen dem mobilen Kommunikationsgerät 111 und beispielsweise einem weiteren mobilen Kommunikationsgerät 401 übertragen werden.

Die Kommunikationsgeräte 111 und 401 können die gleichen Merkmale aufweisen.

Das Subkommunikationsnetzwerk 300 kann weitere Netzwerkentitäten wie beispielsweise einen Router oder eine weitere Funkzugangsentität aufweisen.

Das Subkommunikationsnetzwerk 300 ist gemäß einer Ausführungsform ein Punkt-zu-Punkt-Kommunikationsnetzwerk.

Die RAN-Slice 300 kann als Service bereitgestellt werden und für diejenigen UEs zur Verfügung gestellt werden, welche die Datenaufteilung vorsehen. Die RAN-Slice 300 kann eine eigene Slice-Adresse oder einen eigenen Slice-Identifier bekommen.

In der in Fig. 4 dargestellten Ausführungsform können die getrennten Datenpakete (Teilpakete) über die Slice zu einem weiteren UE 401 getrennt voneinander übertragen werden.

Die Datenübertragungsprotokolle können beispielsweise die vorgenannten Datenübertragungstechnologien definieren.

## Patentansprüche

1. Funkzugangsentität (100), mit:
einer ersten Kommunikationsschnittstelle (101) zum Empfangen eines Kommunikationspakets, wobei das Kommunikationspaket Nutzdaten und Zusatzdaten umfasst und **gekennzeichnet ist durch**
einen Prozessor (103), welcher ausgebildet ist, die Nutzdaten von den Zusatzdaten zu separieren, die Nutzdaten in ein erstes Datenpaket zu überführen und die Zusatzdaten in ein zweites Datenpaket zu überführen; und
eine zweite Kommunikationsschnittstelle (105), welche ausgebildet ist, das erste Datenpaket gemäß einem ersten Datenübertragungsprotokoll auszusenden und das zweite Datenpaket gemäß einem zweiten Datenübertragungsprotokoll auszusenden, wobei das erste Datenübertragungsprotokoll und das zweite Datenübertragungsprotokoll unterschiedlich sind.

2. Funkzugangsentität (100) nach Anspruch 1, wobei der Prozessor (103) ausgebildet ist, die Nutzdaten und die Zusatzdaten aus dem Kommunikationspaket zu extrahieren.

3. Funkzugangsentität (100) nach einem der vorstehenden Ansprüche, wobei das erste Datenpaket und das zweite Datenpaket IP-Datenpakete sind.

4. Funkzugangsentität (100) nach einem der vorstehenden Ansprüche, wobei die Nutzdaten Payload-Daten und/oder wobei die Zusatzdaten Steuerdaten oder Overhead-Daten sind.

5. Funkzugangsentität (100) nach einem der vorstehenden Ansprüche, wobei das erste Datenübertragungsprotokoll und das zweite Datenübertragungsprotokoll eines der folgenden drahtlosen Datenübertragungsprotokolle sind: LTE, UMTS, GSM, Hiperlan, WLAN.

6. Funkzugangsentität (100) nach einem der vorstehenden Ansprüche, wobei die zweite Kommunikationsschnittstelle (105) einen ersten Kommunikationsport (107) für das Aussenden oder Empfangen des ersten Datenpakets gemäß dem ersten Datenübertragungsprotokoll und einen zweiten Kommunikationsport (109) für das Aussenden oder Empfangen des zweiten Datenpakets gemäß dem zweiten Datenübertragungsprotokoll aufweist.

7. Mobiles Kommunikationsgerät (111), mit:
einer ersten Kommunikationsschnittstelle (113) zum Aussenden oder Empfangen eines ersten Datenpakets gemäß einem ersten Datenübertragungsprotokoll, wobei das erste Datenpaket Nutzdaten eines Kommunikationspakets aufweist;
**gekennzeichnet durch**
eine zweite Kommunikationsschnittstelle (115) zum Aussenden oder Empfangen eines zweiten Datenpakets gemäß einem zweiten Datenübertragungsprotokoll, wobei das zweite Datenpaket Zusatzdaten des Kommunikationspakets umfasst; und
einen Prozessor (117), welcher ausgebildet ist, das Kommunikationspaket aus den Nutzdaten und den Zusatzdaten zusammenzusetzen.

8. Mobiles Kommunikationsgerät (111) nach Anspruch 7, wobei der Prozessor (117) ausgebildet ist, die Nutzdaten gemäß den Zusatzdaten zu handhaben.

9. Mobiles Kommunikationsgerät (111) nach Anspruch 7 oder 8, wobei der Prozessor (117) ausgebildet ist, ein Sendedatenpaket, das Nutzdaten und Steuerdaten umfasst, in ein erstes Datenpaket mit Nutzdaten und in ein zweites Datenpaket mit Steuerdaten aufzuteilen, wobei die erste Kommunikationsschnittstelle (113) ausgebildet ist, das erste Datenpaket gemäß dem ersten Datenübertragungsprotokoll auszusenden; und wobei die zweite Kommunikationsschnittstelle (115) ausgebildet ist, das zweite Datenpaket gemäß dem zweiten Datenübertragungsprotokoll auszusenden.

10. Subkommunikationsnetzwerk (300) in einem Kommunikationsnetzwerk mit einer Mehrzahl von Subnetzwerken, mit:
der Funkzugangsentität (100) nach einem der Ansprüche 1 bis 6, wobei die zweite Kommunikationsschnittstelle (109) ausgebildet ist, das erste Datenpaket gemäß dem ersten Datenübertragungsprotokoll zu empfangen oder auszusenden und das zweite Datenpaket gemäß dem zweiten Datenübertragungsprotokoll separat von dem ersten Datenpaket zu empfangen oder auszusenden.

11. Subkommunikationsnetzwerk (300) nach Anspruch 10, mit einer weiteren Netzwerkentität, insbesondere einem Router, welche ausgebildet ist, mit der Funkzugangsentität (100) zu kommunizieren.

12. Subkommunikationsnetzwerk (300) nach Anspruch 11, wobei die weitere Netzwerkentität ausgebildet ist, das erste Datenpaket und das zweite Datenpaket separat voneinander zu empfangen.

13. Subkommunikationsnetzwerk (300) nach einem der Ansprüche 11 oder 12, wobei der Prozessor (103) der Funkzugangsentität (100) ausgebildet ist, ein Kommunikationspaket aus dem ersten Datenpaket und dem zweiten Datenpaket zusammenzusetzen und wobei die erste Kommunikationsschnittstelle (101) der Funkzugangsentität (100) ausgebildet ist, das Kommunikationspaket an die weitere Netzwerkentität auszusenden.

14. Subkommunikationsnetzwerk (300) nach einem der Ansprüche 10 bis 13, wobei die zweite Kommunikationsschnittstelle (105) der Funkzugangsentität (100) ausgebildet ist, mit dem mobilen Kommunikationsgerät (111) nach einem der Ansprüche 7 bis 9 zu kommunizieren.

15. Subkommunikationsnetzwerk (300) nach einem der Ansprüche 10 bis 14, das ein Punkt-zu-Punkt-Subkommunikationsnetzwerk, insbesondere eine Slice, gemäß der 5G-Technologie ist.

## Claims

1. Radio access entity (100), with:
a first communication interface (101) for receiving a communication packet, wherein the communication packet comprises useful data and supplementary data and is **characterized by**
a processor (103) which is configured to separate the useful data from the supplementary data, to transfer the useful data into a first data packet, and to transfer the supplementary data into a second data packet; and
a second communication interface (105) which is configured to transmit the first data packet according to a first data transmission protocol and to transmit the second data packet according to a second data transmission protocol, wherein the first data transmission protocol and the second data transmission protocol are different.

2. Radio access entity (100) according to Claim 1, wherein the processor (103) is designed to extract the useful data and the supplementary data from the communication packet.

3. Radio access entity (100) according to one of the preceding claims, wherein the first data packet and the second data packet are IP data packets.

4. Radio access entity (100) according to any one of the preceding claims, wherein the useful data are payload data and/or wherein the supplementary data are control data or overhead data.

5. Radio access entity (100) according to any one of the preceding claims, wherein the first data transmission protocol and the second data transmission protocol are one of the following wireless data transmission protocols: LTE, UMTS, GSM, Hiperlan, WLAN.

6. Radio access entity (100) according to any one of the preceding claims, wherein the second communication interface (105) has a first communication port (107) for transmitting or receiving the first data packet according to the first data transmission protocol, and a second communication port (109) for transmitting or receiving the second data packet according to the second data transmission protocol.

7. Mobile communication device (111), with:
a first communication interface (113) for transmitting or receiving a first data packet according to a first data transmission protocol, wherein the first data packet contains useful data of a communication packet;
**characterized by**
a second communication interface (115) for transmitting or receiving a second data packet according to a second data transmission protocol, wherein the second data packet contains supplementary data of the communication packet; and
a processor (117) which is designed to compile that communication packet from the useful data and the supplementary data.

8. Mobile communication device (111) according to Claim 7, wherein the processor (117) is designed to handle the useful data according to the instructions of the supplementary data.

9. Mobile communication device (111) according to Claim 7 or 8, wherein the processor (117) is designed to separate a transmitted data packet containing useful data and control data into a first data packet with useful data and a second data packet with control data, wherein the first communication interface (113) is designed to transmit the first data packet according to the instructions of the first data transmission protocol; and wherein the second communication interface (115) is designed to transmit the second data packet according to the instructions of the second data transmission protocol.

10. Subcommunication network (300) in a communication network with a plurality of subnetworks, with:
the radio access entity (100) according to any one of Claims 1 to 6, wherein the second communication interface (109) is designed to receive or transmit the first data packet according to instructions in the first data transmission protocol, and to receive or transmit the second data packet separately from the first data packet according to instructions in the second data transmission protocol.

11. Subcommunication network (300) according to Claim 10, with a further network entity, in particular a router that is designed to communicate with the radio access entity (100).

12. Subcommunication network (300) according to Claim 11, wherein the further network entity is designed to receive the first data packet and the second data packet separately from each other.

13. Subcommunication network (300) according to either of Claims 11 or 12, wherein the processor (103) of the radio access entity (100) is designed to compile a communication packet from the first data packet and the second data packet, and wherein the first communication interface (101) of the radio access entity (100) is designed to transmit the communication packet to the other network entity.

14. Subcommunication network (300) according to any one of Claims 10 to 13, wherein the second communication interface (105) of the radio access entity (100) is designed to communicate with the mobile communication device (111) according to any one of Claims 7 to 9.

15. Subcommunication network (300) according to any one of Claims 10 to 14, which is a point-to-point subcommunication network, in particular a slice, according to 5G technology.

## Revendications

1. Entité d'accès radio (100), comportant :
une première interface de communication (101) pour recevoir un paquet de communication, dans lequel le paquet de communication comprend des données d'utilisateur et des données supplémentaires et se **caractérise par**
un processeur (103) qui est conçu pour séparer les données d'utilisateur des données supplémentaires, pour convertir les données d'utilisateur en un premier paquet de données et pour convertir les données supplémentaires en un deuxième paquet de données ; et
une deuxième interface de communication (105), qui est conçue pour transmettre le premier paquet de données selon un premier protocole de transmission de données et pour transmettre le deuxième paquet de données selon un deuxième protocole de transmission de données, dans lequel le premier protocole de transmission de données et le deuxième protocole de transmission de données sont différents.

2. Entité d'accès radio (100) selon la revendication 1, dans laquelle le processeur (103) est agencé pour extraire les données d'utilisateur et les données supplémentaires du paquet de communication.

3. Entité d'accès radio (100) selon une quelconque des revendications précédentes, dans laquelle le premier paquet de données et le deuxième paquet de données sont des paquets de données IP.

4. Entité d'accès radio (100) selon une des revendications précédentes, dans laquelle les données d'utilisateur sont des données de charge utiles et/ou les données supplémentaires sont des données de commande ou des données de surdébit.

5. Entité d'accès radio (100) selon une quelconque des revendications précédentes, dans laquelle le premier protocole de transmission de données et le deuxième protocole de transmission de données sont un des protocoles de transmission de données sans fil suivants : LTE, UMTS, GSM, Hiperlan, WLAN.

6. Entité d'accès radio (100) selon une quelconque des revendications précédentes, dans laquelle la deuxième interface de communication (105) présente un premier port de communication (107) pour envoyer ou recevoir le premier paquet de données selon le premier protocole de transmission de données et un deuxième port de communication (109) pour envoyer ou recevoir le deuxième paquet de données selon le deuxième protocole de transmission de données.

7. Dispositif de communication mobile (111), comprenant :
une première interface de communication (113) pour envoyer ou recevoir un premier paquet de données selon un premier protocole de transmission de données, dans lequel le premier paquet de données présente des données utilisateur d'un paquet de communication ;
**caractérisé par**
une deuxième interface de communication (115) pour envoyer ou recevoir un paquet de données suivant selon un deuxième protocole de transmission de données, le deuxième paquet de données comprenant des données supplémentaires du paquet de communication ; et
un processeur (117) qui est conçu pour assembler le paquet de communication à partir des données d'utilisateur et des données supplémentaires.

8. Dispositif de communication mobile (111) selon la revendication 7, **caractérisé en ce que** le processeur (117) est agencé pour traiter les données d'utilisateur en fonction des données supplémentaires.

9. Dispositif de communication mobile (111) selon la revendication 7 ou 8, dans lequel le processeur (117) est conçu pour diviser un paquet de données de transmission, qui comprend des données d'utilisateur et des données de commande, en un premier paquet de données avec des données d'utilisateur et un deuxième paquet de données avec des données de commande, dans lequel la première interface de communication (113) est conçue pour émettre le premier paquet de données selon le premier protocole de transmission de données ; et dans lequel la deuxième interface de communication (115) est conçue pour envoyer le deuxième paquet de données conformément au deuxième protocole de transmission de données.

10. Sous-réseau de communication (300) dans un réseau de communication avec une pluralité de sous-réseaux, comportant :
l'entité d'accès radio (100) selon une quelconque des revendications 1, dans laquelle la deuxième interface de communication (109) est conçue pour recevoir ou envoyer le premier paquet de données selon le premier protocole de transmission de données et pour recevoir ou envoyer le deuxième paquet de données selon le deuxième protocole de transmission de données séparément du premier paquet de données.

11. Sous-réseau de communication (300) selon la revendication 10, comportant une autre entité de réseau, notamment un routeur, qui est conçue pour communiquer avec l'entité d'accès radio (100).

12. Sous-réseau de communication (300) selon la revendication 11, dans lequel l'autre entité de réseau est conçue pour recevoir le premier paquet de données et le deuxième paquet de données séparément l'un de l'autre.

13. Sous-réseau de communication (300) selon une des revendications 11 ou 12, dans lequel le processeur (103) de l'entité d'accès radio (100) est agencé pour assembler un paquet de communication à partir du premier paquet de données et du deuxième paquet de données, et dans lequel la première interface de communication (101) de l'entité d'accès radio (100) est conçue pour envoyer le paquet de communication à l'autre entité de réseau.

14. Sous-réseau de communication (300) selon une des revendications 10 à 13, dans lequel la deuxième interface de communication (105) de l'entité d'accès radio (100) est agencée pour communiquer avec le dispositif mobile de communication (111) selon une des revendications 7 à 9.

15. Sous-réseau de communication (300) selon une des revendications 10 à 14, qui est un sous-réseau de communication point à point, notamment une tranche, selon la technologie 5G.
